# EUROPÄISCHE PATENTSCHRIFT

(11) **EP 1 335 060 B1**
(45) Veröffentlichungstag und Bekanntmachung des Hinweises auf die Patenterteilung: **20.06.2007**
(21) Anmeldenummer: 02001933.7
(22) Anmeldetag: 31.01.2002
(51) Int. Cl.: D06F 39/00, A47L 15/46, G01N 21/53

(54) **Trübungssensor mit Temperaturerfassung für Haushaltsgeräte**
Turbidity sensor with temperature sensor for domestic apparatus
Capteur de turbidité avec capteur de température pour appareil ménager

(43) Veröffentlichungstag der Anmeldung: 13.08.2003
(73) Patentinhaber: emz-Hanauer GmbH & Co. KGaA, 92507 Nabburg (DE)
(72) Erfinder: Schenkl, Johann, 92439 Bodenwöhr (DE); Wilhelm, Georg, 92543 Guteneck (DE)
(74) Vertreter: Schmidt, Steffen J.

(56) Entgegenhaltungen:
- EP-A- 0 748 891
- DE-A- 19 806 559
- DE-U- 20 022 433
- US-A- 5 446 531

## Beschreibung

### Gebiet der Erfindung

Die vorliegende Erfindung betrifft im Allgemeinen Sensoren für Reinigungsmedien verwendende Haushaltsgeräte und insbesondere Sensoren zur Erfassung der Trübung und Temperatur von beispielsweise in Waschmaschinen und Spülmaschinen verwendeten Reinigungsmedien.

### Hintergrund der Erfindung

Ein wesentliches Leistungsmerkmal einer Wasch- oder Spülmaschine ist ein geringer Verbrauch an Energie und Wasser, der wesentlich vom Verschmutzungsgrad des zu reinigenden Gutes abhängt. Da der Verschmutzungsgrad eines zu reinigenden Gutes nur schwer oder gar nicht unmittelbar ermittelt werden kann, ist es bekannt, sogenannte Trübungssensoren zu verwenden, um den Verschmutzungsgrad eines zu reinigenden Gutes mittelbar über die Trübung oder Verschmutzung eines Reinigungsmediums zu bestimmen.

Mit Hilfe von Trübungssensoren wird im Allgemeinen mittels eines sich durch ein Reinigungsmedium ausbreitenden Messstrahles die Trübung bzw. Verschmutzung des Reinigungsmediums, wie z.B. Wasch- oder Spülwasser, ermittelt. Anhand der erfassten Trübung oder Verschmutzung des Reinigungsmediums werden der aktuelle Verschmutzungsgrad des zu reinigenden Gutes ermittelt und der Betrieb einer Wasch- oder Spülmaschine entsprechend gesteuert, um eine effektive Reinigung mit minimierten Energie- und Wasserverbrauch zu erreichen.

Ferner hängt die Effektivität der Reinigung mittels einer Wasch- oder Spülmaschine von der Temperatur des Reinigungsmediums ab, da die Temperatur des Reinigungsmediums und insbesondere eine einer vorgegebenen Temperatur oder einem vorgegebenen Temperaturverlauf entsprechende Temperatur das Lösen von Schmutzpartikeln von dem zu reinigenden Gut mitbestimmt.

Hierfür werden Temperatursensoren verwendet, die in dem Wasch- oder Spülraum einer entsprechenden Maschine angeordnet sind und die Temperatur des Reinigungsmediums erfassen. Ferner sollen Temperaturfühler gewährleisten, dass die Temperatur des Reinigungsmediums nicht einen für das zu reinigende Gut vorgegebenen Wert übersteigt, um beispielsweise Kleidungsstücke beim Waschen nicht durch zu hohe Temperaturen zu beschädigen.

Üblicherweise sind Wasch- oder Spülmaschinen mit als separate Komponenten ausgeführten Trübungssensoren und Temperatursensoren ausgestattet, die dem entsprechend Messungen des Reinigungsmediums an unterschiedlichen Stellen in dem Haushaltsgerät vornehmen. Dies kann insbesondere dann zu einen nicht effektiven Betrieb führen, wenn die von einem Trübungssensor ermittelten Trübungswerte und die von einem Temperatursensor ermittelte Temperatur kombiniert werden, um den Maschinenbetrieb zu optimieren.

Des weiteren weisen bekannte Sensoren, die die Trübung und Temperatur eines Reinigungsmediums einer Wasch- oder Spülmaschine ermitteln, große Bauformen auf, die einen entsprechenden Raum in der Maschine einnehmen. Außerdem können solche Sensoren mit großen Abmessungen die Messergebnisse verfälschen, wenn sich in den Bereichen in der Maschine, in denen die Sensoren angeordnet sind, aufgrund der Sensorenbaugröße statische und dynamische Zustände des Reinigungsmediums ergeben, die sich von den Bereichen unterscheiden, in denen die eigentliche Reinigung vorgenommen wird.

Ein weiteres Problem solcher kombinierter Sensoren besteht darin, dass die Komponenten zur Temperaturerfassung oftmals durch Wärmeentwicklung seitens des Sensors selbst gestört werden und/oder aufgrund ihrer Anordnung in dem Sensor Temperaturänderungen des Reinigungsmediums zu langsam erkennen.

DE 200 22 433 U1 offenbart einen Sensor zum Vermessen der Eigenschaften eines gasförmigen oder flüssigen Mediums mit einem Sensorgehäuse. Das Sensorgehäuse weist zwei sich von diesem erstreckende Aufnahmen auf. In einer dieser Aufnahmen ist eine Leuchtdiode angeordnet, wo hingegen in der anderen Aufnahme ein Temperatursensor angeordnet ist. Die von der in der Aufnahme angeordneten Leuchtdiode abgegebene Strahlung wird von einem Fototransistor empfangen, der in dem Sensorkörper angeordnet ist.

DE 198 06 559 A1, US-5,446,531 und EP 0 748 891 A1 beschreiben jeweils Sensoranordnungen, bei denen optische Komponenten zum Aussenden und Empfangen von durch ein zu beurteilendes Medium ausbreitender Strahlung jeweils in sich von einer Gehäusebasis erstreckenden Aufnahme angeordnet sind.

### Aufgabe der Erfindung

Aufgabe der vorliegenden Erfindung ist es, die oben genannten Nachteile bekannter Lösungen zu beseitigen. Insbesondere soll die vorliegende Erfindung einen Sensor für Haushaltsgeräte, wie z.B. Waschmaschinen oder Spülmaschinen, bereitstellen, der sowohl die Trübung als auch die Temperatur eines Reinigungsmediums schnell und zuverlässig erfasst, geringe Abmessungen aufweist, und auf einfache Weise in ein Haushaltsgerät einbaubar ist.

### Kurze Beschreibung der Erfindung

Die Aufgabe der vorliegenden Erfindung wird durch einen Sensor gemäß Anspruch 1 gelöst, der ein Gehäuse mit zwei sich von einer Basis erstreckenden Gehäusefingern aufweist. Die beiden Gehäusefinger, nämlich ein erster Gehäusefinger und ein zweiter Gehäusefinger, sind so geformt, dass sie sich bei einem in einer Waschmaschine oder Spülmaschine eingebauten Sensor in ein Reinigungsmedium erstrecken.

In dem ersten Gehäusefinger ist ein erstes optisches Element angeordnet, während in dem zweiten Gehäusefinger ein zweites optisches Element angebracht ist.

Zur Messung der Trübung oder Verunreinigung des Reinigungsmediums wird ein Messstrahl verwendet, der sich zwischen den optischen Elementen von einem Gehäusefinger zu dem anderen durch das Reinigungsmedium ausbreitet. Wechselwirkungen des Messstrahles auf seinem Ausbreitungsweg durch das Reinigungsmedium werden verwendet, um auf die Trübung oder Verschmutzung des Reinigungsmediums zu schließen.

Erfindungsgemäß ist in dem zweiten Gehäusefinger ein Temperaturfühler zur Erfassung der Temperatur des Reinigungsmediums so angeordnet, dass der Abstand zwischen dem Temperaturfühler und der Basis größer als der Abstand zwischen dem zweiten optischen Element und der Basis ist.

Auf diese Weise wird erreicht, dass der Bereich des zweiten Gehäusefingers, in dem der Temperaturfühler angeordnet ist, weiter als der das zweite optische Element aufweisende Bereich des zweiten Gehäusefingers in das Reinigungsmedium hineinragt. Dies ermöglicht es, die Temperatur des Reinigungsmediums schneller und zuverlässiger zu erfassen, da beispielsweise eine Erwärmung des den Temperaturfühler umgebenden Bereiches oder des Temperaturfühlers selbst durch wärmeerzeugende Bereiche des Sensors weitgehend vermieden wird.

Die Gehäusefinger können so ausgeformt sein, dass deren Längsachsen einen Winkel einschließen, wobei der Abstand zwischen den freien Enden der Gehäusefinger größer oder kleiner sein kann als zwischen den Bereichen der Gehäusefinger, die mit der Basis verbunden sind. Erstrecken sich die Gehäusefinger V-förmig von der Basis, ergibt sich auch bei einer gegenüberliegenden Anordnung der ersten und zweiten optischen Elemente eine längere Messstrecke, die eine genauere Erfassung der Trübung oder Verunreinigung des Reinigungsmediums ermöglicht.

Um eine längere Messstrecke zu erhalten, ist es ferner vorgesehen, die ersten und zweiten optischen Elemente bezüglich der Längsachsen der Gehäusefinger versetzt anzuordnen, so dass sich die Messstrecke zwischen den optischen Elementen schrägverlaufend zwischen den Gehäusefingern erstreckt. Diese Verlängerung der Messstrecke ist insbesondere dann geeignet, wenn sich die ersten und zweiten Gehäusefinger im Wesentlichen parallel von der Basis erstrecken, weshalb im Gegensatz zum Beispiel zu V-förmig angeordneten Gehäusefingern ein im Wesentlichen konstanter Abstand zwischen den Gehäusefingern vorgegeben ist.

Ferner ist es vorgesehen, die ersten und zweiten optischen Elemente relativ zueinander so anzuordnen, dass sie auf einer Achse liegen, die mit einem geradlinigen Ausbreitungsweg für den Messstrahl zusammenfällt. Alternativ ist es möglich, die ersten und zweiten optischen Elemente relativ zu einer solchen Achse versetzt anzuordnen, um spezielle Wechselwirkungen des Messstrahls auf seinen Ausbreitungsweg durch das Reinigungsmedium (beispielsweise Streueffekte) zu erfassen.

Um eine kompaktere Bauform des Sensors zu ermöglichen, ist es vorgesehen, dass die ersten und zweiten Gehäusefinger unterschiedlich lang sind, wobei der zweite, den Temperaturfühler aufweisende Gehäusefinger länger als der andere, erste Gehäusefinger ist.

Eine verkleinerte Bauform kann insbesondere dann erreicht werden, wenn das erste optische Element in einem Endbereich des ersten Gehäusefinger angeordnet ist, d.h. in einem Bereich des ersten Gehäusefingers, der von der Basis am weitesten entfernt ist.

Vorzugsweise ist bei der Verwendung unterschiedlich langer Gehäusefinger der Temperaturfühler möglichst weit entfernt von der Basis, d.h. in einem Endbereich des zweiten Gehäusefingers angeordnet, wobei das zweite optische Element zwischen dem Temperaturfühler und der Basis liegt.

Die unterschiedliche Länge der Gehäusefinger fördert einen Ausgleich von sich zwischen den Gehäusefingern befindlichem Reinigungsmedium während des Reinigungsvorgangs, so dass die mittels der optischen Elemente erfasste Trübung oder Verschmutzung des Reinigungsmediums die tatsächliche Trübung oder Verschmutzung wiedergibt. Dies kann durch eine entsprechende Gestaltung der Basis bzw. einer geeigneten Montageposition des Sensors in einem Haushaltsgerät unterstützt werden.

Ein weiterer Vorteil unterschiedlich langer Gehäusefinger besteht darin, dass der Temperaturfühler noch weiter in dem Reinigungsmedium angeordnet werden kann, ohne dabei die Bauformen des Sensors wesentlich zu vergrößern.

Vorzugsweise ist der Temperaturfühler von einer Wärmeleitpaste oder einem Gel umgeben, die den den Temperaturfühler aufweisenden Endbereich des zweiten Gehäusefingers ausfüllen kann. Die Wärmeleitpaste sorgt für eine bessere Wärmeübertragung von dem Reinigungsmedium außerhalb des Gehäuses über das Gehäuse, genauer das Material des zweiten Gehäusefingers zu dem Temperaturfühler. Ferner wird auf diese Weise der Temperaturfühler in dem Gehäuse nicht fest/hart vergossen, wodurch Probleme aufgrund unterschiedlicher Temperaturkoeffizienten des Gehäuses und des den Temperaturfühler umgebenden Materials vermieden werden. Außerdem ist das den Temperaturfühler umgebende Material nicht spröde und sorgt für eine bessere Haftung an dem Gehäuse verglichen mit festen Vergussstoffen.

Die Verwendung einer Wärmeleitpaste zur Verbesserung der Temperaturübertragung zu dem Temperaturfühler erlaubt einen einfacheren Aufbau des Sensors, da die Wärmeleitpaste lediglich in den Endbereich des zweiten Gehäusefingers eingespritzt oder eingefüllt werden muss. Dies kann vor oder nach einem Anordnen des Temperaturfühlers erfolgen.

Ferner kann eine Trenneinrichtung verwendet werden, die den Endbereich des zweiten Gehäusefingers von den übrigen von dem Gehäuse umschlossenen Bereichen des Sensors trennt. Vorzugsweise stellt die Trenneinrichtung einen, wenigstens hinsichtlich der Wärmeleitpaste, abdichtenden Verschluss des Endbereichs des zweiten Gehäusefingers bereit.

Je nach Anwendung des Sensors, z. B. in Abhängigkeit von dessen Orientierung in einer Wasch- oder Spülmaschine kann die Trenneinrichtung so ausgeführt sein, dass sie ein Herausfließen der Wärmeleitpaste aus dem zweiten Gehäusefinger verhindert. Alternativ oder ergänzend kann die Trenneinrichtung auch für eine thermische Isolierung oder Trennung des Bereiches des zweiten Gehäusefingers, der den Temperaturfühler aufweist, von dem das zweite optische Element aufweisenden Bereich sorgen.

Zur Anordnung der optischen Elemente und des Temperaturfühlers in dem Gehäuse ist es vorgesehen, einen mit diesen Komponenten verbundenen Halter zu verwenden, der zum Aufbau des Sensors in das Gehäuse eingebracht und dort befestigt wird, beispielsweise durch Klemm-, Rast- und/oder Klebverbindungen. Der Halter kann auch für eine Positionierung bzw. Ausrichtung der optischen Elemente und/öder des Temperaturfühlers in dem Gehäuse sorgen. Vorteilhafterweise wird die Trenneinrichtung durch den Halter bereit gestellt, beispielsweise durch eine an dem Halter ausgebildete flächige Struktur, die, vergleichbar zu einem Deckel, den Endbereich des zweiten, längeren Gehäusefingers verschließt.

Ferner ist es vorgesehen, die optischen Elemente und den Temperaturfühler mit einer Platine zu verbinden, so dass die elektrischen Komponenten des erfindungsgemäßen Sensors vorgefertigt in diesem angeordnet werden können.

Der Halter für die optischen Elemente und den Temperaturfühler kann mit der Platine verbunden oder baueinheitlich integriert sein. Ferner ist es möglich, dass die Funktion des Halters durch die Platine selbst bereitgestellt wird. Letzteres trifft ebenfalls für die Trenneinrichtung zu, die beispielsweise durch eine sich im Wesentlichen senkrecht zu der eigentlichen Platine erstreckende Fläche bereitgestellt werden kann.

Vorzugsweise weist die Platine eine sich aus dem Gehäuse erstreckende Steckverbindung auf, um den Sensor auf einfache Weise mit einer Wasch- oder Spülmaschine betriebsfähig zu verbinden.

Mit Hilfe eines Deckels kann der von dem Gehäuse umschlossene Raum verschlossen werden, um beispielsweise ein Eindringen unerwünschter Stoffe (z.B. vagabundierendes Reinigungsmedium und Schmutz) zu verhindern. Des Weiteren kann der Deckel so gestaltet sein, dass sich die Steckverbindung der Platine durch den Deckel nach außen erstreckt.

Außerdem kann der Deckel eine Form aufweisen, die den sich nach außen erstreckenden Teil der Steckverbindung, vergleichbar zu einem Steckergehäuse, umgibt. Auf diese Weise kann der Deckel als formschlüssig Verbindung zu einer Wasch- oder Spülmaschine dienen, wobei an dem entsprechenden Bereich des Deckels vorgesehene Strukturen für eine Codierung beim Verbinden des Sensors mit einer Wasch- oder Spülmaschine und/oder Rast- oder Schnappverbindungen sorgen können.

Ferner stellt die vorliegende Erfindung ein gehäuse gemäß Anspruch 18 bereit, für das die oligen Ausführungen entsprechend gelten.

### Kurzbeschreibung der Zeichnungen

Bei der folgenden Beschreibung bevorzugter Ausführungsformen wird auf die beigefügten Zeichnungen Bezug genommen, von denen zeigen:

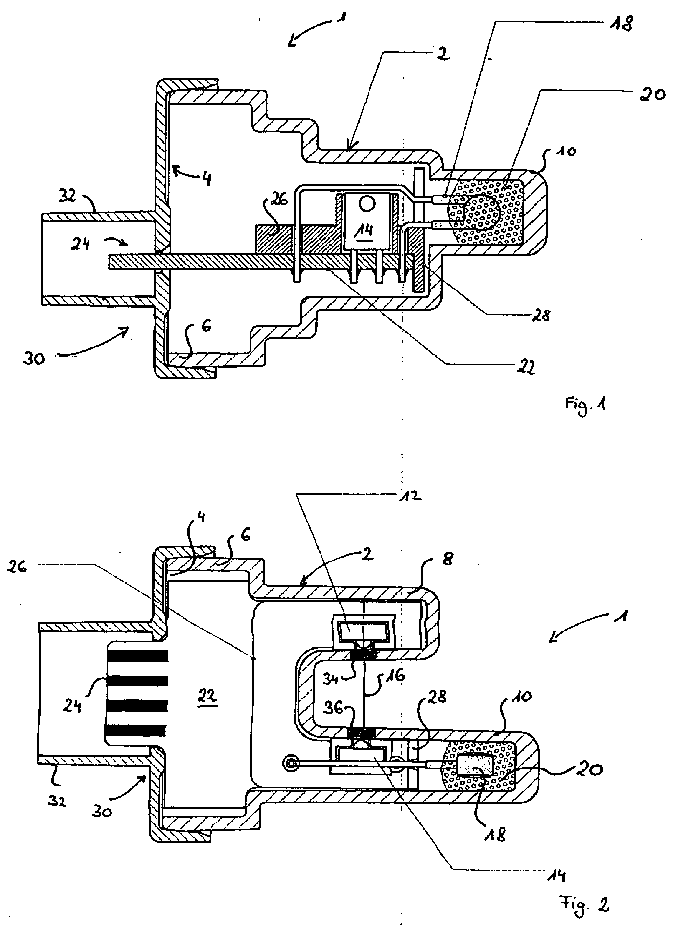

- Fig. 1 und 2: schematische Querschnittsdarstellungen eines erfindungsgemäßen Sensors.

### Beschreibung bevorzugter Ausführungsformen

Fig. 1 und 2 zeigen schematische Querschnittsansichten eines Sensors für Haushaltsgeräte, insbesondere Waschmaschinen und Spülmaschinen, zur Erfassung der Trübung und der Temperatur eines Reinigungsmediums, wie z.B. Wasser, Spülflüssigkeiten, Dämpfe, etc. und Kombinationen derselben.

Der im Ganzen mit 1 bezeichnete Sensor umfasst ein Gehäuse 2 mit einer eine Öffnung 4 umschließenden Basis 6. Ferner weist das Gehäuse 2 zwei sich fingerartig von der Basis erstreckende Enden 8 und 10 auf. Wie in Fig. 2 zu sehen, sind diese im Folgenden kurz als Finger bezeichnete Enden 8 und 10 des Gehäuses 2 unterschiedlich lang, um, wie im Folgenden erläutert, eine verbesserte Temperaturerfassung zu ermöglichen.

Zur Trübungserfassung sind in dem Gehäuse 2 optische Elemente 12 und 14 jeweils in einem der Finger 8 und 10, einander gegenüberliegend angeordnet. Wechselwirkungen eines sich zwischen den optischen Elementen 12 und 14 ausbreitenden Messstrahls mit einem sich zwischen den Fingern 8 und 10 befindenden Reinigungsmedium (d.h. außerhalb des Gehäuses 2) werden verwendet, um die Trübung oder Verunreinigung des Reinigungsmediums zu ermitteln. In Anhängigkeit von der für das Reinigungsmedium zu erfassenden Größe(n), die die Trübung, Verunreinigung und dergleichen des Reinigungsmediums beispielsweise mit Schmutzpartikel, Schwebstoffen, Geweberesten etc. angibt (angeben), kann der Messstrahl 16 ein optischer und/oder akustischer Messstrahl sein. Um beispielsweise die Trübung/Verunreinigung des Reinigungsmediums durch Schmutzpartikel einerseits und durch Schaumbildung andererseits separat zu erfassen, kann bei Verwendung eines optischen Messstrahls dessen Frequenz, vorzugsweise abwechselnd, so variiert werden, dass den verschiedenen Trübung/Verunreinigung verursachenden Effekten entsprechende Größen erzeugt werden.

Zum Aufbau des Messstrahls 16 können die optischen Elemente 12 und 14 einen Sender bzw. einen Empfänger aufweisen. Ferner ist es vorgesehen, dass eines der optischen Elemente 12 und 14 baueinheitlich integriert einen Sender und einen Empfänger umfasst, während das andere optische Element Einrichtungen aufweist, um den ausgesendeten Lichtstrahl zu dem anderen optischen Element zurückzusenden. Im Folgenden wird der Einfachheit halber davon ausgegangen, dass das optische Element 12 als Sender arbeitet, während das optische Element 14 als Empfänger verwendet wird.

In dem längeren Finger 10, der sich bei einer Anordnung des Sensors 1 in einer Waschmaschine oder Spülmaschine weiter in das Reinigungsmedium erstreckt, ist ein Temperaturfühler 18 angeordnet. Insbesondere ist der Temperaturfühler 18 in dem Finger 10 an dessen äußeren, d.h. der Basis 6 gegenüberliegenden Ende angeordnet. Aufgrund des weiter in das Reinigungsmedium hineinragenden Fingers 10 wird die Ansprechzeit des Temperaturfühlers 18 auf Temperaturänderungen des Reinigungsmediums verbessert. Ferner werden genauere Temperaturmessungen möglich, da der Temperaturfühler 18 entfernt von den übrigen Komponenten des Sensors 1 angeordnet ist und dementsprechend Wärmeentwicklungen und/oder -veränderungen in dem Sensor 1 Temperaturmessungen nicht oder nur unwesentlich beeinflussen.

Des Weiteren ist der Endbereich des Fingers 10, in dem sich der Temperaturfühler 18 befindet, mit einer Wärmeleitpaste oder einem Gel 20, wenigstens teilweise, so gefüllt, dass der Temperaturfühler, genauer dessen temperaturempfindliche Komponenten, von der Wärmeleitpaste 20 umgeben sind. Die Wärmeleitpaste 20 erhöht den Wärmekontakt des Temperaturfühlers 18 mit dem ihn umgebenden Abschnitt des Fingers 10 und dadurch auch den Wärmekontakt des Temperaturfühlers 18 mit dem Reinigungsmedium. Alternativ oder ergänzend kann der Temperaturfühler 18 in dem Finger 10 auch so angeordnet sein, dass der Temperaturfühler 18 bzw. seine temperaturempfindlichen Komponenten den Finger 10 unmittelbar berühren.

Zur Steuerung, zum Betrieb und zur Energieversorgung sind die optischen Elemente 12 und 14 und der Temperaturfühler 18 mittels elektrischer Zuleitungen (nicht bezeichnet) mit einer Platine 22 verbunden. Die Platine 22 weist an ihrem den Fingern 8 und 10 gegenüberliegenden Ende eine Steckverbindung 24 auf, die sich durch die Öffnung 4 erstreckt.

Zur Befestigung der optischen Element 12 und 14 und des Temperaturfühlers 18 ist ein an der Platine 22 befestigter Halter 26 vorgesehen, der auch zur Anordnung der Platine 22 bzw. der optischen Element 12 und 14 und des Temperaturfühlers 18 in dem Gehäuse 2 dient. Insbesondere weist der Halter 26 eine sich im Wesentlichen senkrecht zur Platine 22 erstreckende Fläche 28 auf, die den Endbereich des Fingers 10, in dem der Temperaturfühler 18 angeordnet ist, vergleichbar zu einem Deckel, verschließt. Dieser Abschluss des Endbereichs des Fingers 10 sorgt für eine thermische Trennung des Temperaturfühlers 18 von den übrigen Bereichen des Sensors 1 und insbesondere der im Allgemeinen wärmeentwickelnden, mit der Platine 22 verbundenen Bauteilen. Des Weiteren verhindert die Fläche 28, die im Folgenden auch als Deckel bezeichnet wird, ein Ausfließen der Wärmeleitpaste 20 (sofern verwendet) aus dem Endbereich des Fingers 10.

In Abhängigkeit der Gestaltung der Platine 22 ist es möglich, den Halter 26 wegzulassen, wenn dessen Funktionen durch die Platine 22 bereitgestellt werden. Insbesondere sollte in diesem Fall die Platine 22 eine Struktur oder Fläche umfassen, die vergleichbar zu dem Deckel 28 den Endbereich des Fingers 10 von den übrigen von dem Gehäuse 2 umschlossenen Bereichen des Sensors 1 (vorteilhafterweise thermisch) trennt und, falls erforderlich, abdichtend verschließt. Der Deckel 28 kann ferner durch ein auf der Platine 22 angeordnetes elektrisches oder elektronisches Bauteil mit entsprechender Form bereitgestellt sein.

Das offene Ende 4 des Gehäuses 2 ist mit einem Gehäusedeckel 30 im Wesentlichen verschlossen. Der Gehäusedeckel 30 kann mittels Schnapp- und/oder Rastverbindungen mit dem Gehäuse 2 verbunden sein, um einen einfachen Zusammenbau des Sensors 1 zu ermöglichen. Um ein Eindringen des Reinigungsmediums in das Innere des Sensors 1 zu verhindern, können in den Bereichen, in denen der Gehäusedeckel 30 das Gehäuse 2 berührt, Dichtelemente (nicht dargestellt) verwendet werden, insbesondere wenn die Verbindung des Gehäusedeckels 30 und des Gehäuses 2 alleine keine ausreichende Abdichtung des Sensors 1 gewährleistet.

Der Gehäusedeckel 30 weist eine Öffnung (nicht bezeichnet) auf, durch die sich die Steckverbindung 24 der Platine 22 erstreckt, wobei auch hier eine Abdichtung vorgenommen werden kann. Ferner weist der Gehäusedeckel 30 eine die Steckverbindung 24 wenigstens teilweise umgebende Bewandung 32 auf, die als Führung und Verbindung mit entsprechenden Strukturen und/oder Komponenten eines Haushaltsgerätes, wie z.B. einer Waschmaschine oder einer Spülmaschine, dient. Die Bewandung 32 ermöglicht es beispielsweise, den Sensor 1 in eine entsprechend geformte Öffnung oder Ausnehmung im Inneren eines Haushaltsgeräts einzustecken, um die Steckverbindung 24 mit entsprechenden elektrischen Komponenten zu verbinden.

In Abhängigkeit der verwendeten optischen Elemente 12 und 14, genauer in Abhängigkeit des verwendeten Messstrahles 16 ist es vorgesehen, dass das Gehäuse 2 wenigstens in den Bereichen für den Messstrahl 16 durchlässig ist, in denen die optischen Elemente 12 und 14 angeordnet sind. So kann beispielsweise das Gehäuse 2, wie in Fig. 2 angedeutet, lichtdurchlässige Bereiche oder Fenster 34 und 36 aufweisen, wenn der Messstrahl 16 ein optischer Messstrahl ist. Ein Vereinfachung wird erreicht, wenn das gesamte Gehäuse 2 aus einem für den Messstrahl 16 durchlässigen Material aufgebaut ist, beispielsweise aus Plexiglas.

Des Weiteren ist es vorgesehen, dass das Gehäuse 2 wenigstens in dem Aufnahmeende des Fingers 10, in dem dieser Temperaturfühler 18 angeordnet ist, ein Material aufweist, dessen thermische Eigenschaften ein schnelles und fehlerfreies Erfassen einer Temperatur des Reinigungsmediums außerhalb des Gehäuses 2 durch den innenliegenden Temperaturfühler 18 ermöglicht. Vorteilhafterweise wird das Gehäuse 2 aus einem Material aufgebaut, das sowohl für den Messstrahl 16 durchlässig ist als auch für eine optimierte Wärmeübertragung zu dem Temperaturfühler 18 sorgt.

## Patentansprüche

1. Sensor für Haushaltsgeräte, insbesondere Waschmaschinen und Spülmaschinen, mit:
- einem Gehäuse (2), das zwei sich von einer Basis (6) erstreckende erste und zweite Gehäusefinger (8, 10) aufweist,
- einem ersten optischen Element (12), das in dem ersten Gehäusefingers (8) angeordnet ist, und
- einem zweiten optischen Element (14), das in dem zweiten Gehäusefinger (10) angeordnet ist, wobei sich ein von den optischen Elementen (12, 14) ausgesendeter und empfangener Messstrahl (16) zwischen den Gehäusefingern (8, 10) außerhalb des Gehäuses (2) zur Erfassung der Trübung eines das Gehäuse (2) wenigstens teilweise umgebenden Reinigungsmediums ausbreitet,
**gekennzeichnet durch**
- einen Temperaturfühler (18), der zur Erfassung der Temperatur des Reinigungsmediums in dem zweiten Gehäusefingers (10) in einem größeren Abstand von der Basis (6) als das zweite optische Element (14) angeordnet ist.

2. Sensor nach Anspruch 1, bei dem
sich der erste und der zweite Gehäusefinger (8, 10) im Wesentlichen parallel zueinander erstrecken.

3. Sensor nach Anspruch 1 oder 2, bei dem
der erste Gehäusefinger (8) kürzer als der zweite Gehäusefinger (10) ist.

4. Sensor nach einem der vorhergehenden Ansprüche, bei dem
das erste optische Element (12) in einem Endbereich des ersten Gehäusefingers (8) angeordnet ist.

5. Sensor nach einem der vorhergehenden Ansprüche, bei dem
das zweite optische Element (14) dem ersten optischen Element (12) gegenüberliegend, in dem zweiten Gehäusefinger (10) in einem Bereich zwischen dem Temperaturfühler (18) und der Basis (6) angeordnet ist.

6. Sensor nach einem der vorherigen Ansprüche, bei dem
der Temperaturfühler (18) von einer Wärmeleitpaste (20) oder einem Gel (20) umgeben ist, die den den Temperaturfühler (18) aufweisenden Bereich des zweiten Gehäusefingers (10) im Wesentlichen vollständig ausfüllt.

7. Sensor nach einem der vorherigen Ansprüche, bei dem
der den Temperaturfühler (18) aufweisende Bereich des zweiten Gehäusefingers (10) durch eine Trenneinrichtung (28) von den übrigen, von dem Gehäuse (2) umschlossenen Bereichen getrennt ist.

8. Sensor nach Anspruch 7, bei dem
die Trenneinrichtung (28) den den Temperaturfühler (18) aufweisenden Bereich des zweiten Gehäusefingers (10) abdichtend verschließt.

9. Sensor nach einem der vorherigen Ansprüche, bei dem
die optischen Elemente (12, 14) und der Temperaturfühler (18) mittels eines Halters (26) in dem Gehäuse (2) angeordnet sind.

10. Sensor nach Anspruch 9, bei dem
die Trenneinrichtung (28) eine im Wesentlichen flächige Struktur des Halters (26) ist.

11. Sensor nach einem der vorherigen Ansprüche, bei dem
die optischen Elemente (12, 14) und der Temperaturfühler (18) elektrisch leitend mit einer in dem Gehäuse (2) angeordneten Platine (22) verbunden sind.

12. Sensor nach Anspruch 11, bei dem
die Trenneinrichtung (28) eine flächige Struktur ist, die sich im Wesentlichen senkrecht zu der Platine (22) erstreckt.

13. Sensor nach Anspruch 11 oder 12, bei dem
die Trenneinrichtung (28) durch die Platine (22) oder durch ein an dieser angeordnetes Bauteil bereitgestellt ist.

14. Sensor gemäß einem der Ansprüche 11 bis 13, bei dem
der Halter (26) mit der Platine (22) verbunden ist.

15. Sensor gemäß einem der Ansprüche 11 bis 14, bei dem
die Platine (22) eine sich aus dem Gehäuse (2) erstreckende Steckverbindung (24) zur elektrischen Verbindung mit einem Haushaltsgerät aufweist.

16. Sensor nach einem der vorherigen Ansprüche, bei dem
das Gehäuse (2) einen den Gehäusefingern (8, 10) gegenüberliegenden Gehäusedeckel (30) umfasst, wobei das Gehäuse (2) und der Gehäusedeckel (30) einen Sensorinnenraum definieren.

17. Sensor nach Anspruch 16, bei dem
sich die Steckverbindung (24) der Platine (22) aus dem Sensorinnenraum durch den Gehäusedeckel (30) erstreckt.

18. Gehäuse für einen Sensor für Haushaltsgeräte, insbesondere Waschmaschinen und Spülmaschinen, mit:
- einer Basis (6),
- einem sich von der Basis (6) erstreckenden ersten Gehäusefinger (8) zur Aufnahme eines ersten optischen Elements (12), und
- einem sich von der Basis (6) erstreckenden zweiten Gehäusefinger (10) zur Aufnahme eines zweiten optischen Elements (14), wobei die ersten und zweiten optischen Elemente (12, 14) zur Erfassung der Trübung eines das Gehäuse wenigstens teilweise umgebenden Reinigungsmediums mittels eines sich zwischen den ersten und zweiten optischen Elementen (12, 14) ausbreitenden Messstrahls (16) vorgesehen sind,
**gekennzeichnet durch**
- den zweiten Gehäusefinger (10) zur Aufnahme eines Temperaturfühlers (18) zur Erfassung der Temperatur des Reinigungsmediums, wobei der zur Aufnahme des Temperaturfühler (18) vorgesehene Bereich des zweiten Gehäusefingers (10) in einem größeren Abstand von der Basis (6) als der Bereich des zweiten optischen Ele- ments (14) angeordnet ist, der zur Aufnahme des zwei- ten optischen Elements (14) vorgesehen ist.

19. Gehäuse nach Anspruch 18, bei dem
sich der erste und der zweite Gehäusefinger (8, 10) im Wesentlichen parallel zueinander erstrecken.

20. Gehäuse nach Anspruch 18 oder 19, bei dem
der erste Gehäusefinger (8) kürzer als der zweite Gehäusefinger (10) ist.

21. Gehäuse nach einem der Ansprüche 18 bis 20, bei dem
der zur Anordnung des ersten optischen Elements (12) vorgesehene Bereich in einem Endbereich des ersten Gehäusefingers (8) angeordnet ist.

22. Gehäuse nach einem der Ansprüche 18 bis 21, bei dem
der zur Anordnung des zweiten optischen Elements (14) vorgesehene Bereich des zweiten Gehäusefingers (10) dem zur Anordnung des ersten optischen Elements (12) vorgesehenen Bereich des ersten Gehäusefinger (8) gegenüberliegend, in einem Bereich zwischen dem zur Anordnung des Temperaturfühlers (18) vorgesehenen Bereich des zweiten Gehäusefingers (10) und der Basis (6) angeordnet ist.

23. Gehäuse nach einem der Ansprüche 18 bis 22, bei dem eine Trenneinrichtung (28) vorgesehen ist, um den zur Anordnung des Temperaturfühlers (18) vorgesehenen Bereich des zweiten Gehäusefingers (10) von den übrigen, von dem Gehäuse umschlossenen Bereichen zu trennen.

24. Gehäuse nach einem der Ansprüche 18 bis 23, bei dem
zur Anordnung der optischen Elemente (12, 14) und/oder des Temperaturfühlers (18) ein in dem Gehäuse anzuordnender Halter (26) vorgesehen ist.

25. Gehäuse nach Anspruch 24, bei dem
die Trenneinrichtung (28) eine im Wesentlichen flächige Struktur des Halters (26) ist.

26. Gehäuse nach einem der Ansprüche 18 bis 25, bei dem
zur elektrischen Verbindung der optischen Elemente (12, 14) und/oder des Temperaturfühlers (18) eine in dem Gehäuse anzuordnende Platine vorgesehen ist.

27. Gehäuse nach Anspruch 26, bei dem
die Trenneinrichtung (28) eine flächige Struktur ist, die sich im Wesentlichen senkrecht zu der Platine (22) erstreckt.

28. Gehäuse nach Anspruch 26 oder 27, bei dem
die Trenneinrichtung (28) durch die Platine (22) oder durch ein an dieser angeordnetes Bauteil bereitgestellt ist.

29. Gehäuse nach einem der Ansprüche 26 bis 28, bei dem
der Halter (26) zur Verbindung mit der Platine (22) vorgesehen ist.

30. Gehäuse gemäß einem der Ansprüche 26 bis 29, bei dem
die Platine (22) eine sich aus dem Gehäuse erstreckende Steckverbindung (24) zur elektrischen Verbindung mit einem Haushaltsgerät aufweist.

31. Gehäuse nach einem der Ansprüche 18 bis 30, mit
einem den Gehäusefingern (8, 10) gegenüberliegend anzuordnenden Gehäusedeckel (30), wobei das Gehäuse und der Gehäusedeckel (30) einen Sensorinnenraum definieren.

32. Gehäuse nach Anspruch 31, bei dem
sich die Steckverbindung (24) der Platine (22) aus dem Sensor in den Innenraum durch den Gehäusedeckel (30) erstreckt.

## Claims

1. Sensor for household appliances, in particular washing machines and dishwashers, comprising:
- a housing (2) which comprises first and second housing fingers (8, 10) extending from a basis (6),
- a first optical element (12) which is arranged in the first housing finger (8) and,
- a second optical element (14) which is arranged in the second housing finger (10) wherein a sensing beam (16) being transmitted and received by the optical elements (12, 14) propagates between the housing fingers (18, 10) exterior of the housing (2) for sensing the turbidity of a cleaning medium at least partially surrounding the housing (2),
**characterized by**
- a temperature sensor (18) which, for sensing the temperature of the cleaning medium, is arranged in the second housing finger (10) at a greater distance from the basis (6) than the second optical element (14).

2. Sensor according to claim 1, wherein
the first and the second housing fingers (8, 10) extend essentially parallel with respect to each other.

3. Sensor according to claim 1 or 2, wherein
the second housing finger (8) is shorter than the second housing finger (10).

4. Sensor according to one of the preceding claims, wherein
the first optical element (12) is arranged in an end portion of the first housing finger (8).

5. Sensor according to one of the preceding claims, wherein
the second optical element (14) is arranged, opposite the first optical element (12), in the second housing finger (10) in a portion between the temperature sensor (18) and the basis (6).

6. Sensor according to one of the preceding claims, wherein
the temperature sensor (18) is surrounded by a heat conduction paste (20) or a gel (20) which fills the portion of the second housing finger (10) comprising the temperature sensor (18) substantially completely.

7. Sensor according to one of the preceding claims, wherein
the portion of the second housing finger (10) comprising the temperature sensor (18) is separated by a separation means (28) from the remaining portions being enclosed by the housing (2).

8. Sensor according to claim 7, wherein
the separation means (28) closes the portion of the second housing finger (10) comprising the temperature sensor (18) in a sealing manner.

9. Sensor according to one of the preceding claims; wherein
the optical elements (12, 14) and the temperature sensor (18) are arranged in the housing (2) by means of a support (26).

10. Sensor according to claim 9, wherein
the separation means (28) is an essentially plane structure of the support (26).

11. Sensor according to one of the preceding claims, wherein
the optical elements (12, 14) and the temperature sensor (18) are connected in an electrically conductive manner to a circuit board (22) arranged in the housing (2).

12. Sensor according to claim 11, wherein
the separation means (28) is a plane structure which extends essentially perpendicular to the circuit board (22).

13. Sensor according to claim 11 or 12, wherein
the separation means (28) is provided by the circuit board (22) or by means of a component arranged thereon.

14. Sensor according to one of claims 11 to 13, wherein
the support (26) is connected to the circuit board (22).

15. Sensor according to one of claims 11 to 14, wherein
the circuit board (22) comprises a plug connector (24) extending out of the housing (2) for electrical connection to a household appliance.

16. Sensor according to one of the preceding claims, wherein
the housing (2) comprises a housing lid (30) located opposite the housing fingers (8,10), the housing (2) and the housing lid (30) defining a sensor interior.

17. Sensor according to claim 16, wherein
the plug connector (24) of the circuit board (22) extends out of the sensor interior through the housing lid (30).

18. Housing for a sensor for household appliances, in particular washing machines and dishwashers, comprising:
- a basis (6),
- a first optical housing finger (8) extending from the basis (6) for receiving a first optical element (12) and
- a second housing finger (10) extending from the basis (6) for receiving a second optical element (14) wherein the first and second optical elements (12, 14) are provided for sensing the turbidity of a cleaning medium at least partially surrounding the housing by means of a sensing beam (16) propagating between the first and second optical elements (12, 14)
**characterized by**
- the second housing finger (10) for receiving a temperature sensor (18) for sensing the temperature of the cleaning medium, wherein the portion of the second housing finger (10) provided for receiving the temperature sensor (18) is located at a greater distance from the basis (6) than the portion of the second optical element (14), which is provided for receiving the second optical element (14).

19. Housing according to claim 18, wherein
the first and the second housing fingers (8,10) extend essentially parallel to each other.

20. Housing according to claim 18 or 19, wherein
the first housing finger (8) is shorter than the second housing finger (10).

21. Housing according to one of the claims 18 to 20, wherein
the portion provided for arranging the first optical element (12) is located in an end portion of the first housing finger (8).

22. Housing according to one of claims 18 to 21, wherein
the portion of the second housing finger (10) provided for arranging the second optical element (14) is located opposite the portion of the first housing finger (8) being provided for arranging the first optical element (12) in a portion between the portion of the second housing finger (10) provided for arranging the temperature sensor (18) and the basis (6).

23. Housing according to one of claims 18 to 22, wherein
a separation means (28) is provided in order to separate the portion of the second housing finger (10) provided for arranging the temperature sensor (18) from the remaining portions enclosed by the housing.

24. Housing according to one of claims 18 to 23, wherein
a support (26) to be arranged in the housing (2) is provided for arranging the optical elements (12, 14) and/or the temperature sensor (18).

25. Housing according to claim 24, wherein
the separation means (28) is an essentially plane structure of the support (26).

26. Housing according to one of claims 18 to 25, wherein
a circuit board (22) to be arranged in the housing is provided for electrically connecting the optical elements (12, 14) and/or the temperature sensor (18).

27. Housing according to claim 26, wherein
the separation means (28) is a plane structure which extends essentially perpendicular with respect to the circuit board (22).

28. Housing according to claim 26 or 27, wherein
the separation means (28) is provided by the circuit board (22) or by a component arranged thereon.

29. Housing according to one of claims 26 to 28, wherein
the support (26) is provided for connection to the circuit board (22).

30. Housing according to one of claims 26 to 29, wherein
the circuit board (22) comprises a plug connector (24) extending out of the housing for electrical connection to a household appliance.

31. Housing according to one of claims 18 to 30, comprising
a housing lid (30) to be arranged opposite the housing fingers (8,10), the housing and the housing lid (30) defining a sensor interior.

32. Housing according to claim 31, wherein
the plug connector (24) of the circuit board (22) extends out of the sensor into the interior through the housing lid (30).

## Revendications

1. Capteur pour appareils ménagers, en particulier pour lave-linge et lave-vaisselle, comportant :
- un carter (2) présentant deux doigts de carter (8, 10) - soit un premier et un deuxième doigt - qui se détachent d'un socle (6),
- un premier élément optique (12) disposé dans le premier doigt (8) du carter, et
- un deuxième élément optique (14) disposé dans le deuxième doigt (10) du carter, un rayon de mesure (16) émis et reçu par les éléments optiques (12, 14) se propageant en dehors du carter (2) entre les doigts (8, 10) du carter pour capter la turbidité d'un produit détergent entourant pour le moins en partie le carter (2),
**caractérisé par**
- un capteur de température (18) disposé dans le deuxième doigt (10) du carter à une plus grande distance du socle (6) que le deuxième élément optique (14) pour capter la température du produit détergent.

2. Capteur selon la revendication 1, dans le cadre duquel
le premier et le deuxième doigt (8, 10) du carter s'étendent pour l'essentiel parallèlement l'un par rapport à l'autre.

3. Capteur selon la revendication 1 ou 2, dans le cadre duquel
le premier doigt (8) du carter est plus court que le deuxième doigt (10).

4. Capteur selon l'une des revendications précédentes, dans le cadre duquel
le premier élément optique (12) est disposé dans une partie terminale du premier doigt (8) du carter.

5. Capteur selon l'une des revendications précédentes, dans le cadre duquel
le deuxième élément optique (14) est disposé dans le deuxième doigt (10) en face du premier élément optique (12), dans une partie située entre le capteur de température (18) et le socle (6).

6. Capteur selon l'une des revendications précédentes, dans le cadre duquel
le capteur de température (18) est entouré par une pâte thermoconductrice (20) ou par un gel (20) qui remplit pour l'essentiel complètement la partie du deuxième doigt (10) du carter équipée du capteur de température (18).

7. Capteur selon l'une des revendications précédentes, dans le cadre duquel
la partie du deuxième doigt (10) du carter équipée du capteur de température (18) est séparée des autres parties délimitées par le carter (2) au moyen d'un dispositif de séparation (28).

8. Capteur selon la revendication 7, dans le cadre duquel
le dispositif de séparation (28) ferme de manière étanche la partie du deuxième doigt (10) du carter équipée du capteur de température (18).

9. Capteur selon l'une des revendications précédentes, dans le cadre duquel
les éléments optiques (12, 14) et le capteur de température (18) sont montés dans le carter (2) au moyen d'un support (26).

10. Capteur selon la revendication 9, dans le cadre duquel
le dispositif de séparation (28) consiste en une structure pour l'essentiel plane du support (26).

11. Capteur selon l'une des revendications précédentes, dans le cadre duquel
les éléments optiques (12, 14) et le capteur de température (18) sont reliés de manière électroconductrice à une platine (22) disposée dans le carter (2).

12. Capteur selon la revendication 11, dans le cadre duquel
le dispositif de séparation (28) consiste en une structure plane qui s'étend pour l'essentiel perpendiculairement à la platine (22).

13. Capteur selon la revendication 11 ou 12, dans le cadre duquel
le dispositif de séparation (28) est constitué par la platine (22) ou par une pièce disposée sur celle-ci.

14. Capteur selon l'une des revendications 11 à 13, dans le cadre duquel
le support (26) est relié à la platine (22).

15. Capteur selon l'une des revendications 11 à 14, dans le cadre duquel
la platine (22) présente une connexion enfichable (24) faisant saillie à l'extérieur du carter (2) pour permettre la liaison électrique avec un appareil ménager.

16. Capteur selon l'une des revendications précédentes, dans le cadre duquel
le carter (2) comporte un couvercle de carter (30) placé à l'opposé des doigts de carter (8, 10), le carter (2) et le couvercle de carter (30) définissant un espace intérieur du capteur.

17. Capteur selon la revendication 16, dans le cadre duquel
la connexion enfichable (24) de la platine (22) fait saillie de l'espace intérieur du capteur et s'étend à travers le couvercle (30) du carter.

18. Carter pour un capteur pour appareils ménagers, en particulier pour lave-linge et lave-vaisselle, comportant :
- un socle (6),
- un premier doigt de carter (8) se détachant dudit socle (6) et destiné au logement d'un premier élément optique (12) et
- un deuxième doigt de carter (10) se détachant dudit socle (6) et destiné au logement du deuxième élément optique (14), le premier et deuxième élément optique (12, 14) étant prévus pour capter la turbidité d'un produit détergent entourant pour le moins en partie le carter au moyen d'un rayon de mesure (16) se propageant entre le premier et le deuxième élément optique (12, 14),
**caractérisé par**
- le deuxième doigt de carter (10) destiné au logement d'un capteur de température (18) pour capter la température du produit détergent, la partie du deuxième doigt (10) du carter destinée au logement du capteur de température (18) étant disposée à une plus grande distance du socle (6) que la partie du deuxième élément optique (14) destinée au logement du deuxième élément optique (14).

19. Carter selon la revendication 18, dans le cadre duquel
le premier et le deuxième doigt (8, 10) du carter s'étendent pour l'essentiel parallèlement l'un par rapport à l'autre.

20. Carter selon la revendication 18 ou 19, dans le cadre duquel
le premier doigt (8) du carter est plus court que le deuxième doigt (10).

21. Carter selon l'une des revendications 18 à 20, dans le cadre duquel
la partie destinée au logement du premier élément optique (12) est disposée dans une partie terminale du premier doigt (8) du carter.

22. Carter selon l'une des revendications 18 à 21, dans le cadre duquel
la partie du deuxième doigt de carter (10) destinée au logement du deuxième élément optique (14) et située en face de la partie du premier doigt (8) du carter destinée au logement du premier élément optique (12) est disposée entre la partie du deuxième doigt (10) du carter destinée au logement du capteur de température (18) et le socle (6).

23. Carter selon l'une des revendications 18 à 22, dans le cadre duquel
est prévu un dispositif de séparation (28) pour séparer la partie du deuxième doigt (10) du carter destinée au logement du capteur de température (18) des autres parties délimitées par le carter.

24. Carter selon l'une des revendications 18 à 23, dans le cadre duquel
est prévu un support (26) à monter à l'intérieur du carter pour permettre le positionnement des éléments optiques (12, 14) et/ou du capteur de température (18).

25. Carter selon la revendication 24, dans le cadre duquel
le dispositif de séparation (28) consiste en une structure pour l'essentiel plane du support (26).

26. Carter selon l'une des revendications 18 à 25, dans le cadre duquel
est prévue une platine à monter à l'intérieur du carter pour relier électriquement les éléments optiques (12, 14) et/ou le capteur de température (18).

27. Carter selon la revendication 26, dans le cadre duquel
le dispositif de séparation (28) consiste en une structure plane qui s'étend pour l'essentiel perpendiculairement à la platine (22).

28. Carter selon la revendication 26 ou 27, dans le cadre duquel
le dispositif de séparation (28) est constitué par la platine (22) ou par une pièce disposée sur celle-ci.

29. Carter selon l'une des revendications 26 à 28, dans le cadre duquel
le support (26) est prévu pour permettre l'assemblage avec la platine (22).

30. Carter selon l'une des revendications 26 à 29, dans le cadre duquel
la platine (22) présente une connexion enfichable (24) qui fait saillie à l'extérieur du carter pour permettre la liaison électrique avec un appareil ménager.

31. Carter selon l'une des revendications 18 à 30, comportant
un couvercle de carter (30) à disposer à l'opposé des doigts (8, 10) du carter, le carter et le couvercle de carter (30) définissant un espace intérieur du capteur.

32. Carter selon la revendication 31, dans le cadre duquel
la connexion enfichable (24) de la platine (22) fait saillie à l'extérieur du capteur et s'entend dans l'espace intérieur à travers le couvercle (30) du carter.
